# EUROPEAN PATENT SPECIFICATION

(11) **EP 2 347 855 B1**
(45) Date of publication and mention of the grant of the patent: **16.05.2012**
(21) Application number: 10000782.2
(22) Date of filing: 26.01.2010
(51) Int. Cl.: B23Q 11/10

(54) **System and method for delivery of liquid cryogenic fluid to machining tools**
System und Verfahren zur Versorgung von Zerspanungswerkzeugen mit flüssiger kryogenischer Flüssigkeit
Système et procédé de fourniture de fluide cryogénique liquide dans des outils d'usinage

(43) Date of publication of application: 27.07.2011
(73) Proprietor: University of Ljubljana, 1000 Ljubljana (SI)
(72) Inventor: Pusavec, Franci, 1000 Ljubljana (SI); Kopac, Janez, 1000 Ljubljana (SI)
(74) Representative: Schmidt, Karsten

(56) References cited:
- EP-A2- 0 252 312
- EP-A2- 1 580 284
- US-B1- 6 705 142

## Description

### Field of the invention

The present invention is in the field of cryogenic machining. In particular, the invention relates to systems and methods for delivering cryogenic fluid in liquid form to machining tools, preferably to a cutting zone of the machining tool.

### Background of the invention

Most machining operations are performed by cutting tools comprising a holder and one or more cutting inserts each having a top surface terminating with one or more cutting edges. The cutting edge of an insert makes contact with the workpiece to remove material therefrom in the form of chips. The shearing movement of the cutting edge relative to the workpiece generates a substantial amount of heat energy, sufficient to bring the cutting edge to temperatures of 800 to 1100°C.

Among the causes of failure of cutting inserts employed in prior art machining operations is abrasion at the cutting insert, which is particularly pronounced at elevated temperatures. In order to reduce abrasion at the cutting insert, improved materials, such as coated metals, have been developed. In addition to the improved materials and coatings used in the manufacture of cutting inserts, attempts have been made to increase tool life by reducing the temperature in the cutting zone, which is defined by the area surrounding the cutting edge of the insert, the insert-workpiece interface and the area on the workpiece where material is sheared to form chips. One method of cooling practiced in the prior art is flood cooling which involves the spraying of a low pressure stream of coolant towards the cutting zone. Typically, a nozzle disposed several millimeters or centimeters above the cutting tool and the workpiece directs a low pressure stream of coolant towards the workpiece, tool holder, cutting insert and on the chips being produced. Typical coolants are cooled synthetic oils and other nonvolatile fluids with relatively high boiling points. These fluid not only reduce the temperature at the cutting zone, but also exert a lubricating effect.

It is also known to use cooling fluids with a very low boiling point (boiling temperature). Examples of such fluids are liquid nitrogen, liquid oxygen, liquid air, liquefied ammonia and liquefied volatile hydrocarbon gases, such as methane, ethane, propane, etc., and liquefied chlorofluorcarbon gases, such as Freon-12. These fluids also not only serve as coolant, but also serve as lubricants. Cooling with such cooling fluid is commonly referred to as cryogenic cooling.

There exists a relatively large body of prior art publications pertaining to cryogenic cooling of tools, including: WO 99/60079 (Hong) and U.S. Pat. No. 5,761,974 (Wang, et al.), U.S. Pat. No. 5,901,623 (Hong), U.S. Pat. No. 3,971,114 (Dudley), U.S. Pat. No. 5,103,701 (Lundin, et al.), U.S. Pat. No. 6,200,198 (Ukai, et al.), U.S. Pat. No. 5,509,335 (Emerson), and U.S. Pat. No. 4,829,859 (Yankoff).

From EP-A-0 252 312 there is known a system and a method according to the preambles of claims 1 and 13. When liquefied gases with very low boiling points are used as cooling fluids, a common problem is that the cooling fluid tends to evaporate while being transported from a thermally insulated storage container, such as a "dewar", to the machining tool. This is caused by the fact that pipes and tubes used for transporting cooling fluid from a storage container to the machining tool are normally non-ideally insulated, so that the cooling fluid, which will normally be in a liquid state when it leaves the storage container, increases its temperature and therefore evaporates upon transport through the transport pipe or tube.

Evaporation of the cooling fluid is normally undesired, since the cooling fluid in gaseous form has far lower cooling capacity than has the same cooling fluid in liquid form. Furthermore the lubrication effect of gaseous cooling fluids are inferior to the ones of liquid cooling fluids. This holds true not only for completely gaseous fluid versus completely liquid cooling fluids, but also cooling fluid in partly gaseous/partly liquid phase (e.g. aerosols) are not preferred, since they also show inferior cooling and lubricating properties.

In view of the above mentioned state of the art, it is an object of the invention to improve the delivery of cooling fluid from a storage container to the machining tool by delivering the cooling fluid to the machining tool in a substantially liquid form.

### Summary of the invention

The present invention relates to a system for the delivery of a cooling fluid to a machining tool, said system comprising phase separation means defining an inner volume for the separation of a substantially liquid phase and a substantially gaseous phase of said cooling fluid; said phase separation means having an inlet to said inner volume, a first outlet from said inner volume for the substantially liquid phase and a second outlet from said inner volume for the substantially gaseous phase of said cooling fluid; and a double lumen conduit comprising an inner lumen and an outer lumen; wherein said inner lumen is in fluid communication with said first outlet, and said outer lumen is in fluid communication with said second outlet.

The first outlet is preferably at a level vertically below the level of the second outlet. Preferably, the first outlet is arranged at a level to receive, upon operation, cooling fluid in substantially liquid state, while the second outlet is arranged at a level to receive, upon operation, cooling fluid in a substantially gaseous state.

Preferably, said inner lumen and said outer lumen of said double lumen conduit are co-axial. The inner lumen is preferably formed within an inner surface of an inner tube of said double lumen conduit. The outer lumen is preferably formed between an outer surface of said inner tube and an inner surface of an outer tube.

In a preferred embodiment, said inner volume of said phase separation means has a vertical dimension, and said phase separation is effected by separation of said substantially liquid phase and said substantially gaseous phase in said vertical dimension by gravity.

In a preferred embodiment, said phase separation means further comprises an outer volume adjacent said inner volume, said outer volume fluidly connecting said second outlet to said outer lumen. The outer volume preferably forms a protective layer around the inner lumen, and preferably reduces heat transfer into said inner volume.

In a preferred embodiment, said double lumen conduit is a flexible tube. In another preferred embodiment, said double lumen conduit comprises a further insulation layer. The further insulation layer is preferably radially outward of the outer tube. The double lumen conduit may also be a double lumen pipe, tubing, tube, line or channel.

In a preferred embodiment, a proximal end of said inner lumen or inner tube is connected to said phase separation means and a distal end of said inner lumen or inner tube is connected to a first nozzle. Preferably said first nozzle being adapted for delivering cooling fluid in a substantially liquid state to a cutting zone of said machining tool.

In another preferred embodiment, at the distal end of said outer lumen or of said outer tube there is provided a second nozzle for providing cooling fluid in substantially gaseous form to a cutting zone, or an area around the cutting zone, or a broader cutting zone, of the machining tool.

The invention also relates to a system of the above defined type, said system further comprising first control means for controlling the flow of cooling fluid through the outer lumen. The system preferably comprises second control means for controlling the flow of cooling fluid through the inner lumen. First and second control means can individually be in form of an adjustment screw which, or in form of a controllable fluid flow restrictor.

In another preferred embodiment, said control means comprises a first temperature sensor for establishing a temperature of the cooling fluid in said inner lumen.

In another preferred embodiment, a second temperature sensor is provided for establishing a temperature of the cooling fluid at the inlet.

In another preferred embodiment, said control means is adapted to increase the flow of cooling fluid through the second outlet and/or outer lumen, if said first temperature sensor indicates that the cooling fluid in said inner lumen is in a gaseous state.

The invention also relates to a method of delivering a cooling fluid in a substantially liquid form to a cutting zone of a machining tool, said method comprising providing a cooling fluid to phase separation means; separating a liquid phase of said cooling fluid and a substantially gaseous phase of said cooling fluid in said separating means by gravity; directing said gaseous phase to an outer lumen of a double lumen conduit; directing said liquid phase to an inner lumen of said double lumen conduit; providing said liquid phase to said cutting zone of said machining tool, via said inner lumen.

In a preferred embodiment, the flow of cooling fluid in the outer lumen is controlled. Preferably, the flow of said cooling fluid in the outer lumen is controlled at a level sufficiently high to avoid substantial evaporation of the cooling fluid in said inner lumen.

In another preferred embodiment, the flow of cooling fluid in said inner lumen is controlled. Preferably, the flow of cooling fluid in said inner lumen is controlled to a level sufficiently high to substantially avoid evaporation of said cooling fluid in said inner tube.

### Brief description of the figures

Figure 1 shows a first aspect of the invention.
Figure 2 shows a second aspect of the invention.
Figure 3 shows a third aspect of the invention.
Figure 4 shows a preferred embodiment of the invention.

### Detailed description of the invention

The term "co-axial", when used in connection to two tubes being co-axial to one another, shall be understood to mean that the two tubes are in form of an inner tube and an outer tube, said inner tube being disposed within an inner surface of said outer tube. The term "co-axial" in connection with two lumens shall be understood to define that the two lumens are in form of an inner lumen and an outer lumen, said inner lumen being formed within an inner surface of an inner tube, said outer lumen formed between the outer surface of said inner tube and an inner surface of an outer tube, wherein said inner and outer tube are co-axial tubes.

A "cooling fluid", according to the present invention, shall be any gas or liquid fluid suitable for cooling the cutting zone of a machining tool. Preferred cooling fluids of the invention are highly volatile fluids with low boiling temperatures, such as liquid nitrogen, liquid oxygen, liquid air, liquefied ammonia and liquefied volatile hydrocarbon gases (such as methane, ethane, propane, etc.), and liquefied chlorofluorcarbon gases, such as Freon-12. These fluids not only serve as coolant, but can also serve as lubricants.

A "conduit", within the meaning of the present invention, shall be understood as being any conduit, tube, tubing, pipe, line or channel through which liquid and gaseous fluids can flow.

An "inert atmosphere", within the meaning of the present invention relates to an atmosphere which is substantially free of oxygen.

A cooling fluid in "substantially gaseous state", according to the invention, shall be understood as being a cooling fluid a major part of which is in a gaseous state. Preferably, at least 50%, 80%, 90%, 95%, 98%, 99% or 99.9% by volume of said cooling fluid is in a gaseous state. Alternatively, at least 50%, 80%, 90%, 95%, 98%, 99% or 99.9% by weight of said cooling fluid is in gaseous state.

A cooling fluid in "substantially liquid state", according to the invention, shall be understood as being a cooling fluid a major part of which is in a liquid state. Preferably, at least 50%, 80%, 90%, 95%, 98%, 99% or 99.9% by volume of said cooling fluid is in liquid state. Alternatively, at least 50%, 80%, 90%, 95%, 98%, 99% or 99.9% by weight of said cooling fluid is in liquid state.

Preferred embodiments of the present invention shall now be described with reference to the accompanying figures.

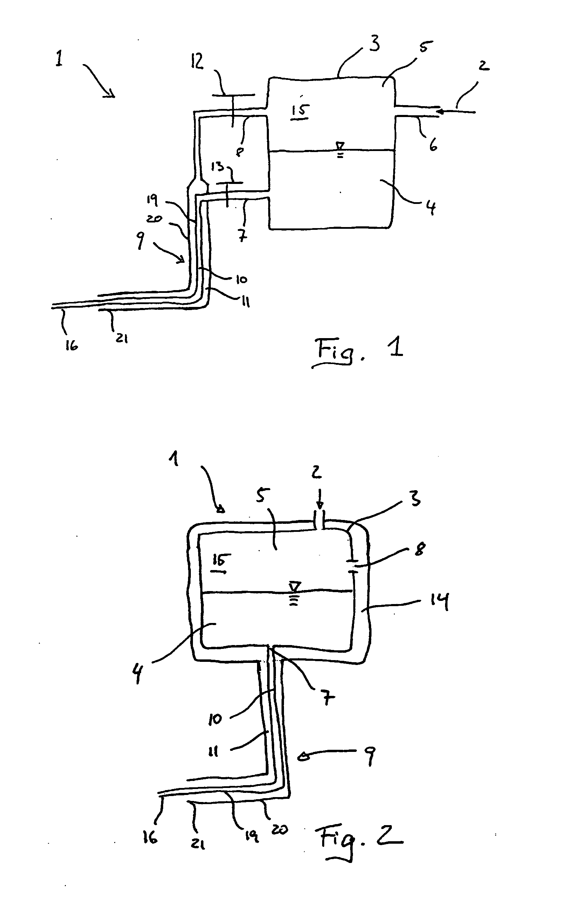

As shown in Figure 1, a system of the invention comprises phase separation means 3 having an inner volume 15 with an inlet 6, a first outlet 7 and a second outlet 8 thereto.

Phase separation means 3 preferably comprises a vertically extending inner volume 15 in which phase separation of the cooling fluid may occur. The phase separation preferably occurs by gravity. Inner volume 15 may preferably assume the shape of a vertically extending cylinder, but may also be of any other shape, provided that it is suitable for allowing phase separation of a liquid phase from a gaseous phase under the influence of gravity. The phase separation is thus due to the difference in specific weight of the liquid phase and the gaseous phase, wherein the liquid phase 4 tends to occupy the lower part of inner volume 15, while the gaseous phase 5 tends to occupy the upper part of volume 15.

Phase separation means 3 is preferably provided with a (not shown) layer of an insulating material, to reduce loss of (negative) heat in inner volume 15, due to heat transfer into inner volume 15 from the surrounding environment.

Cooling fluid 2 is received by inner volume 15 from a (not shown) insulated container (e.g. a dewar), through inlet 6. The cooling fluid entering phase separation means 3 or inner volume 15 may be in liquid form, but it can also be in form of a mixture of cooling fluid in a liquid and a gaseous state. The two phases will readily separate in inner volume 15 under the influence of gravity.

As previously mentioned, phase separation means 3 comprises a first outlet 7 and a second outlet 8. The first outlet 7 is provided at a first level, which, under normal operating conditions, is below the surface level of cooling fluid in a liquid state 4 in inner volume 15. The second outlet is at a second level which level is above said first level. The second outlet is preferably at a level which is, under normal operating conditions, above the surface level of the cooling fluid in a liquid state 4. The first outlet 7 is thus provided to receive cooling fluid in a substantially liquid state, while the second outlet 8 is provided to receive cooling fluid in a substantially gaseous state.

The substantially gaseous phase 5 of the cooling fluid at outlet 8 may comprise a minor amount of the cooling fluid in liquid state.

Likewise the substantially liquid phase 4 of the cooling fluid at outlet 7 may comprise a minor amount of the cooling fluid in gaseous state.

The first outlet 7 of separation means 3 is in fluid communication with an inner lumen 10 of a double lumen conduit 9. The inner lumen 10 is formed within the inner surface of an inner tube 10 of the double lumen conduit 9. The second outlet 8, on the other hand, is in fluid communication with a outer lumen 11 of double lumen conduit 9. The outer lumen 11 is formed between an outer surface of the inner tube 19 and an inner surface of outer tube 20.

First control means 12 may be provided so as to control the flow of cooling fluid through outlet 8 and/or outer lumen 9. In addition, second control means 13 may be provided so as to control the flow of cooling fluid through outlet 7 and/or inner lumen 10.

The cooling fluid in a substantially gaseous state 5 will have a temperature far below ambient temperature. The cooling fluid in outer lumen 11 thus provides a protective layer, and thus will significantly reduce heat transfer into inner lumen 10 from the environment. The protective layer of relatively cold cooling fluid in a gaseous state thus reduces the warming of the substantially liquid cooling fluid in inner lumen 10. This serves to avoid evaporation of the liquid cooling fluid in inner lumen 10.

First control means 12 can be adjusted such as to control the flow of substantially gaseous cooling fluid 5 through outer lumen 11 to a level which is sufficiently high to prevent substantial heating of the liquid phase in inner lumen 10. Thus, evaporation of the liquid phase in inner lumen 10 is substantially reduced or avoided. The cooling fluid in inner lumen 10 is thus delivered in a substantially liquid form. Preferably, first control means 12 is also adjusted so as to prevent the lowering of the liquid phase 4 to the level of first outlet 7, since this would cause filling of inner lumen 10 with gaseous cooling fluid.

Second control means 13 are provided, such as to enable allowing the flow of cooling fluid in liquid form through inner lumen 10, when the machining tool is operative, and not to allow the flow of cooling fluid in liquid form through inner lumen 10, when the machining tool is inoperative.

Second control means 13 can be adjusted such as to control the flow of substantially liquid cooling fluid 5 through inner lumen 10 to a level which is sufficiently high to prevent the substantial heating of the liquid phase in inner lumen 10. Thus, evaporation of the liquid phase in inner lumen 10 is substantially reduced or avoided. The cooling fluid in inner lumen 10 in thus delivered in a substantially liquid form.

Preferably, the cooling liquid at the point of delivery (or at the distal end of inner lumen 16, or at nozzle 16) comprises less than 60%, 50%, 40%, 30%, 20%, 10%, 5%, 2%, 1 or 0.1% by volume of cooling fluid in a gaseous state.

The double lumen conduit 9 is preferably thermally insulated by a separate insulation layer radially outward of the outer tube 20.

Figure 2 shows a preferred embodiment of the system of the invention, in which the warming of cooling fluid in the phase separation means 3 is further reduced by a protective layer of relatively cold cooling fluid in a substantially gaseous state around inner volume 15. Such a layer of gaseous cooling fluid is preferably formed, according to the invention, by providing a separate outer volume 14 adjacent said inner volume 15. Loss of (negative) heat from the inner volume is thus effectively reduced. Additional insulation means may be provided external to outer volume 14. This may be in form of a layer of insulating material, such as a layer of a polymer foam, a layer of a fibrous material, or a layer of vacuum.

It is self-evident that, although not shown, first and second control means 12 and 13 can be provided in the embodiment shown in Figure 2.

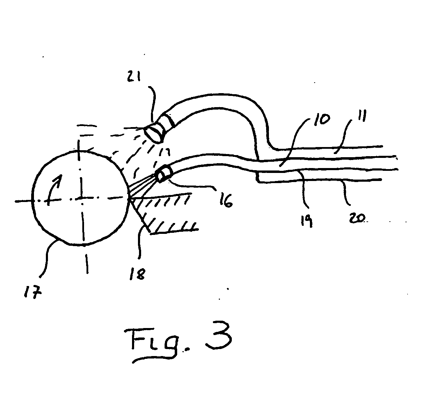

In Figure 3 there is shown one embodiment of a distal part of double lumen conduit 9. At the distal end of inner tube 19 there is provided a first nozzle 16. First nozzle 16 is adapted to provide cooling fluid in substantially liquid form to a cutting zone of the machining tool, preferably to a rake face and/or flank face of the cutting tool 18. The first nozzle 16 is located preferably less than 1 mm, or less than 5 mm, or less than 10 mm, or less than 50 mm away from a cutting zone or from a rake face and/or flank face of the cutting tool 18. First nozzle 16 is preferably shaped and arranged such as to provide a continuous jet of liquid cooling fluid to the cutting zone. First nozzle 16 is preferably shaped and arranged to provide a jet of liquid cooling fluid to the rake face and/or flank face of cutting tool 18.

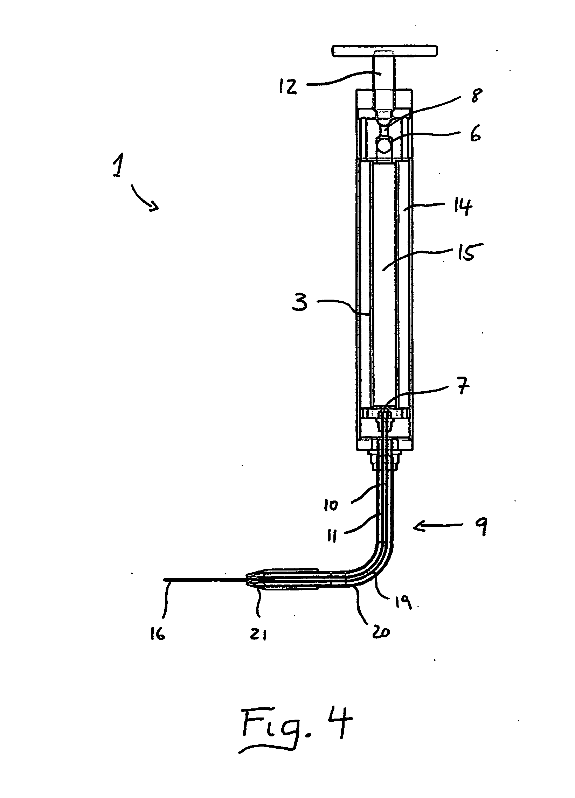

At the distal end of outer tube 20 there is preferably arranged a second nozzle 21, which is shaped and arranged to provide an atmosphere of gaseous cooling fluid around the cutting zone. The atmosphere of the gaseous cooling fluid is preferably an inert atmosphere. While Figure 3 shows non-concentrical first and second nozzles, these can also be arranged in a concentrical manner. This is e.g. shown in the embodiment of Figure 4. Suitable fixing means (not shown) may be provided to hold first and second nozzles in a suitable position. The fixing means may be adjustable fixing means.

Figure 4 shows a preferred embodiment of the system of the invention. Shown is a cross-sectional view on a system according to the invention. In this embodiment, inner volume 15 is formed within phase separation means 3, which in this embodiment is in form of an elongated cylinder. Phase separation means 3 has an inlet 6 which is connectable to a source of substantially liquid cooling fluid, such as a dewar container. Inner volume 15 extends vertically, such that the gaseous phase and the liquid phase of a cooling fluid present in phase separation means 3 can separate in the vertical dimension, under the influence of gravity. A first outlet 7 is provided at the bottom of phase separation means 3, for receiving cooling fluid in substantially liquid form. A second outlet 8 is provided at the upper end of the elongated cylinder 3, to receive cooling fluid in substantially gaseous form. First control means 12 are provided for controlling the amount of substantially gaseous cooling fluid entering second outlet 8. First control means 12 are preferably in form of an adjustment screw, suitable for adjusting the flow of gaseous cooling fluid through outlet 8. Outlet 8, though channels, is in fluid communication with an outer volume 14, which is adjacent inner volume 15. Outer volume 14 preferably completely surrounds inner volume 14. Since outer volume 14 receives relatively cold cooling fluid in gaseous form, it forms a protective layer of cold cooling fluid, thereby reducing the transfer of heat from the exterior to the inner volume 15. Separate insulation means (not shown) can be provided external the outer volume 14, to further reduce heat transfer into inner volume 15.

First outlet 7 is thus arranged to receive cooling fluid in substantially liquid form, while second outlet 8 is arranged to receive substantially gaseous cooling fluid from inner volume 15. First outlet 7 is connected to, and in fluid communication with, the inner lumen 10 of a double lumen conduit 9. Second outlet 8, on the other hand, is fluidly connected, via outer volume 14, to outer lumen 11 of double lumen conduit 9. Outer lumen 11 is thus in fluid communication with second outlet 8. Double lumen conduit 9 is shown in Figure 4 as a relatively short conduit, but it can of course have any suitable length. Double lumen conduit 9 can be, e.g., 0.5, 1, 2, 3, 4, or 5 meters in length.

As shown in Figure 4, at the distal end of inner lumen 10 there is provided a first nozzle 16. First nozzle 16 is preferably shaped and arranged to provide a continuous jet of liquid cooling fluid, e.g., to a cutting zone of a machining tool, preferably to a rake face and/or flank face of a cutting tool 18.

Furthermore, at the distal end of outer volume 11 there is provided a second nozzle 21, which is preferably shaped to provide cooling fluid in gaseous form to an area around the cutting zone of the machining tool. Preferably, an inert atmosphere is thereby created at an area around the cutting zone.

### Reference numerals:

1 - system
2 - cooling fluid
3 - phase separation means
4 - liquid phase
5 - substantially gaseous phase
6 - inlet
7 - first outlet
8 - second outlet
9 - double lumen conduit
10 - inner lumen
11 - outer lumen
12 - first control means
13 - second control means
14 - outer volume
15 - inner volume
16 - first nozzle
17 - workpiece
18 - cutting tool
19 - inner tube
20 - outer tube
21 - second nozzle

## Claims

1. System for the delivery of a cooling fluid (2) to a machining tool, said system comprising:
phase separation means (3) defining an inner volume (15) for the separation of a substantially liquid phase (4) and a substantially gaseous phase (5) of said cooling fluid (2);
said phase separation means (3) having an inlet (6) to said inner volume (15), a first outlet (7) from said inner volume (15) for receiving the substantially liquid phase (4) and a second outlet (8) from said inner volume (15);
and
a double lumen conduit (9) comprising an inner lumen (10) and an outer lumen (11);
wherein said inner lumen (10) is in fluid communication with said first outlet (7), and said outer lumen (11) is in fluid communication with said second outlet (8) **characterised by** the second outlet (8), receiving the substantially gaseous phase (5).

2. System of claim 1, wherein said inner lumen (10) and said outer lumen (11) are co-axial.

3. System of any one of the above claims, wherein said inner volume (15) has a vertical dimension, and said phase separation is effected by separation of said liquid phase (4) and said substantially gaseous phase (5) in said vertical dimension by gravity.

4. System of any one of the above claims, wherein said phase separation means (3) further comprises an outer volume (14) adjacent said inner volume (15), said outer volume (14) fluidly connecting said second outlet (8) and said outer lumen (11).

5. System of any one of the above claims, wherein said double lumen conduit (9) is a flexible tube.

6. System of any one of the above claims, wherein a
proximal end of said inner lumen (10) is connected to said phase separation means (3) and a distal end of said inner lumen is connected to a first nozzle (16), said first nozzle (16) being adapted for delivering cooling fluid in a substantially liquid state to a cutting zone of said machining tool.

7. System of any one of the above claims, wherein at a distal end of said outer lumen (11) there is provided a second nozzle (21) for providing cooling liquid in a substantially gaseous form to an area around a cutting zone of said machining tool.

8. System of any one of the above claims, further comprising first control means (12) for controlling the flow of cooling fluid through outer lumen (11).

9. System of any one of the above claims, further comprising second control means (13) for controlling the flow of cooling fluid through inner lumen (10).

10. System on any one of claim 8 or 9, wherein said control means comprise a first temperature sensor for establishing a temperature of the cooling fluid in said inner lumen (10).

11. System of any one of claims 8 to 10, wherein a second temperature sensor is provided for establishing a temperature of the cooling fluid at the inlet (6).

12. The system of claim 11 or 12, wherein said control means is adapted to increase the flow of cooling fluid through the second outlet (8) if said first temperature sensor indicates that the cooling fluid (2) in said inner lumen (10) is gaseous.

13. Method of delivering a cooling fluid (2) to a cutting zone of a machining tool, said method comprising:
providing a cooling fluid (2) to phase separation means (3);
separating a liquid phase (4) of said cooling fluid (2) and a substantially gaseous phase (5) of said cooling fluid (2) in said separating means (3) by gravity;
directing said liquid phase (4) to an inner lumen (10) of a double lumen conduit (9);
providing said liquid phase (4) to said cutting zone of said machining tool, **characterised by** directing said gaseous phase (5) to an outer lumen (11) of said double lumen conduit (9).

14. Method of claim 13, wherein the flow of cooling fluid (2) in the outer lumen (11) is controlled.

15. Method of claim 13 or 14, wherein the flow of cooling fluid (2) in said inner lumen (10) is controlled.

## Patentansprüche

1. System zum Zuführen eines Kühlfluids (2) zu einem Zerspanungswerkzeug, wobei das System umfasst:
ein Phasentrennungsmittel (3), das ein inneres Volumen (15) definiert, für die Trennung einer im Wesentlichen flüssigen Phase (4) und einer im Wesentlichen gasförmigen Phase (5) des Kühlfluids (2) ;
wobei das Phasentrennungsmittel (3) einen Einlass (6) zu dem inneren Volumen (15), einen ersten Auslass (7) von dem inneren Volumen (15) zum Entgegennehmen der im Wesentlichen flüssigen Phase (4) und einen zweiten Auslass (8) von dem inneren Volumen (15) aufweist; und
eine Doppellumenleitung (9), die ein inneres Lumen (10) und ein äußeres Lumen (11) umfasst;
wobei das innere Lumen (10) mit dem ersten Auslass (7) in Fluidkommunikation steht und das äußere Lumen (11) mit dem zweiten Auslass (8) in Fluidkommunikation steht, **dadurch gekennzeichnet,**
**dass** der zweite Auslass (8) die im Wesentlichen gasförmige Phase (5) entgegennimmt.

2. System nach Anspruch 1, wobei das innere Lumen (10) und das äußere Lumen (11) koaxial sind.

3. System nach einem beliebigen der oben genannten Ansprüche, wobei das innere Volumen (15) eine vertikale Abmessung aufweist und die Phasentrennung durch Trennung der flüssigen Phase (4) und der im Wesentlichen gasförmigen Phase (5) in der vertikalen Dimension mittels Schwerkraft durchgeführt wird.

4. System nach einem beliebigen der oben genannten Ansprüche, wobei das Phasentrennungsmittel (3) ferner ein äußeres Volumen (14) dem inneren Volumen (15) benachbart umfasst, wobei das äußere Volumen (14) eine Fluidverbindung des zweiten Auslasses (8) und des äußeren Lumens (11) herstellt.

5. System nach einem beliebigen der oben genannten Ansprüche, wobei die Doppellumenleitung (9) ein Schlauch ist.

6. System nach einem beliebigen der oben genannten Ansprüche, wobei ein proximales Ende des inneren Lumens (10) mit dem Phasentrennungsmittel (3) verbunden ist und ein distales Ende des inneren Lumens mit einer ersten Düse (16) verbunden ist, wobei die erste Düse (16) zum Zuführen von Kühlfluid in einem im Wesentlichen flüssigen Zustand zu einer Schneidezone des Zerspanungswerkzeugs ausgebildet ist.

7. System nach einem beliebigen der oben genannten Ansprüche, wobei an einem distalen Ende des äußeren Lumens (11) eine zweite Düse (21) zum Bereitstellen von Kühlflüssigkeit in einer im Wesentlichen gasförmigen Form zu einem Bereich rund um eine Schneidezone des Zerspanungswerkzeugs vorgesehen ist.

8. System nach einem beliebigen der oben genannten Ansprüche, ferner umfassend erste Regelmittel (12) zum Regeln des Stroms von Kühlfluid durch das äußere Lumen (11).

9. System nach einem beliebigen der oben genannten Ansprüche, ferner umfassend zweite Regelmittel (13) zum Regeln des Stroms von Kühlfluid durch das innere Lumen (10).

10. System nach einem beliebigen der Ansprüche 8 oder 9, wobei die Regelmittel einen ersten Temperatursensor zum Bestimmen einer Temperatur des Kühlfluids in dem inneren Lumen (10) umfassen.

11. System nach einem beliebigen der Ansprüche 8 bis 10, wobei ein zweiter Temperatursensor zum Bestimmen einer Temperatur des Kühlfluids am Einlass (6) vorgesehen ist.

12. System nach Anspruch 11 oder 12, wobei die Regelmittel ausgebildet sind, um den Strom von Kühlfluid durch den zweiten Auslass (8) zu erhöhen, wenn der erste Temperatursensor anzeigt, dass das Kühlfluid (2) in dem inneren Lumen (10) gasförmig ist.

13. Verfahren zum Zuführen eines Kühlfluids (2) zu einer Schneidezone eines Zerspanungswerkzeugs, wobei das Verfahren umfasst:
Bereitstellen eines Kühlfluids (2) zu Phasentrennungsmitteln (3);
Trennen einer flüssigen Phase (4) des Kühlfluids (2) und einer im Wesentlichen gasförmigen Phase (5) des Kühlfluids (2) in dem Trennmittel (3) mittels Schwerkraft;
Leiten der flüssigen Phase (4) zu einem inneren Lumen (10) einer Doppellumenleitung (9);
Zuführen der flüssigen Phase (4) zu der Schneidezone des Zerspanungswerkzeugs,
**gekennzeichnet durch** Leiten der gasförmigen Phase (5) zu einem äußeren Lumen (11) der Doppellumenleitung (9).

14. Verfahren nach Anspruch 13, wobei der Strom des Kühlfluids (2) in dem äußeren Lumen (11) geregelt wird.

15. Verfahren nach Anspruch 13 oder 14, wobei der Strom des Kühlfluids (2) in dem inneren Lumen (10) geregelt wird.

## Revendications

1. Système de fourniture de fluide de refroidissement (2) dans un outil d'usinage, ledit système comprenant :
un moyen de séparation de phase (3) définissant un volume intérieur (15) pour la séparation d'une phase essentiellement liquide (4) et d'une phase essentiellement gazeuse (5) dudit fluide de refroidissement (2) ;
ledit moyen de séparation de phase (3) présentant une entrée (6) vers ledit volume intérieur (15),
une première sortie (7) dudit volume intérieur (15) pour recevoir la phase essentiellement liquide (4) et une seconde sortie (8) dudit volume intérieur (15) ; et
un conduit à double passage (9) comprenant un passage intérieur (10) et un passage extérieur (11) ;
dans lequel ledit passage intérieur (10) est en communication fluidique avec ladite première sortie (7), et ledit passage extérieur (11) est en communication fluidique avec ladite seconde sortie (8), **caractérisé en ce que** ladite seconde sortie (8) reçoit la phase essentiellement gazeuse (5).

2. Système selon la revendication 1, dans lequel ledit passage intérieur (10) et ledit passage extérieur (11) sont coaxiaux.

3. Système selon l'une quelconque des revendications précédentes, dans lequel ledit volume intérieur (15) a une dimension verticale, et ladite séparation de phase est effectuée par la séparation de ladite phase liquide (4) et de ladite phase essentiellement gazeuse (5) dans ladite dimension verticale par gravité.

4. Système selon l'une quelconque des revendications précédentes, dans lequel ledit moyen de séparation de phase (3) comprend en outre un volume extérieur (14) adjacent audit volume intérieur (15), ledit volume extérieur (14) connectant fluidiquement ladite seconde sortie (8) et ledit passage extérieur (11).

5. Système selon l'une quelconque des revendications précédentes, dans lequel ledit conduit à double passage (9) est un tube flexible.

6. Système selon quelconque l'une des revendications précédentes, dans lequel une extrémité proximale dudit passage intérieur (10) est reliée audit moyen de séparation de phase (3) et une extrémité distale dudit passage intérieur est reliée à un premier embout (16), ledit premier embout (16) étant adapté pour fournir du fluide de refroidissement dans un état essentiellement liquide à une zone de coupe dudit outil d'usinage.

7. Système selon quelconque l'une des revendications précédentes, dans lequel un second embout (21) est prévu sur une extrémité distale dudit passage extérieur (11) pour fournir du liquide de refroidissement sous une forme essentiellement gazeuse à une surface autour d'une zone de coupe dudit outil d'usinage.

8. Système selon quelconque l'une des revendications précédentes, comprenant en outre un premier moyen de commande (12) pour commander l'écoulement du fluide de refroidissement à travers le passage extérieur (11).

9. Système selon quelconque l'une des revendications précédentes, comprenant en outre un second moyen de commande (13) pour commander l'écoulement du fluide de refroidissement à travers le passage intérieur (10).

10. Système selon quelconque l'une des revendications 8 ou 9, dans lequel ledit moyen de commande comprend un première sonde de température pour établir une température du fluide de refroidissement dans ledit passage intérieur (10).

11. Système selon l'une des revendications 8 à 10, dans lequel une seconde sonde de température est prévue pour établir une température du fluide de refroidissement sur l'entrée (6).

12. Système selon la revendication 11 ou 12, dans lequel ledit moyen de commande est adapté pour augmenter l'écoulement de fluide de refroidissement à travers la seconde sortie (8) si ladite première sonde de température indique que le fluide de refroidissement (2) dans ledit passage intérieur (10) est gazeux.

13. Procédé de fourniture de fluide de refroidissement (2) à une zone de coupe d'un outil d'usinage, ledit procédé comprenant :
la fourniture d'un fluide de refroidissement (2) à un moyen de séparation de phase (3) ;
la séparation d'une phase liquide (4) dudit fluide de refroidissement (2) et d'une phase essentiellement gazeuse (5) dudit fluide de refroidissement (2) par gravité dans ledit moyen de séparation de phase (3) ;
la direction de ladite phase liquide (4) vers un passage intérieur (10) d'un conduit à double passage (9),
la fourniture de ladite phase liquide (4) à ladite zone de coupe dudit outil d'usinage, **caractérisé par**
la direction de ladite phase gazeuse (5) vers un passage extérieur (11) dudit conduit à double passage (9).

14. Procédé selon la revendication 13, dans lequel l'écoulement de fluide de refroidissement (2) dans le passage extérieur (11) est commandé.

15. Procédé selon la revendication 13 ou 14, dans lequel l'écoulement de fluide de refroidissement (2) dans ledit passage intérieur (10) est commandé.
